# EUROPÄISCHE PATENTSCHRIFT

(11) **EP 1 158 847 B1**
(45) Veröffentlichungstag und Bekanntmachung des Hinweises auf die Patenterteilung: **07.05.2003**
(21) Anmeldenummer: 00922487.4
(22) Anmeldetag: 26.02.2000
(51) Int. Cl.: A01C 19/00, A01C 7/06

(54) **GERÄT ZUM AUSBRINGEN VON LANDWIRTSCHAFTLICHEM GUT**
DEVICE FOR SPREADING AN AGRICULTURAL PRODUCT
APPAREIL POUR EPANDRE UN PRODUIT AGRICOLE

(30) Priorität: 04.03.1999 US 262388
(43) Veröffentlichungstag der Anmeldung: 05.12.2001
(73) Patentinhaber: DEERE & COMPANY, Moline, Illinois 61265-8098 (US)
(72) Erfinder: PLATTNER, Chad, Eric, Woodhull, IL 61490 (US); RIEWERTS, Paul, Reed, Port Byron, IL 61275 (US)
(74) Vertreter: Holst, Sönke, Dr.
(86) Internationale Anmeldenummer: EP0001604
(87) Internationale Veröffentlichungsnummer: WO00051412

(56) Entgegenhaltungen:
- US-A- 2 801 833
- US-A- 4 623 078
- US-A- 4 779 471
- US-A- 5 802 997

## Beschreibung

Die Erfindung betrifft ein Gerät zum Ausbringen von Gut gemäß ddem Oberbegriff des Anspruchs 1.

Reihenpflanzgeräte werden, wie schon ihr Name sagt, verwendet, um landwirtschaftliche Pflanzen bzw. Saatgut in Reihen in den Boden zu setzen. Diese Reihenpflanzgeräte, wie sie aus der US 4 623 078 A bekannt sind, umfassen einen quer zur Vorwärtsbewegungsrichtung verlaufenden Werkzeugträger, an dem eine Vielzahl an Reihenpflanzeinheiten angebracht sind. Die einzelnen Pflanzeinheiten sind häufig am Werkzeugträger durch einen Parallellenker befestigt, so daß sie sich nach oben und unten bewegen können. Jede Pflanzeinheit ist mit einem Saatgutbehälter, einem Saatgut-Dosiergerät, einem Furchenöffner und einem Saatgutrohr ausgestattet, das sich zwischen dem Dosiergerät und der durch den Furchenöffner erzeugten Furche im Boden erstreckt. Jede einzelne Pflanzeinheit kann auch mit einem Behälter zur Aufnahme von Chemikalien, einem Chemikalien-Dosiergerät und einer Chemikalienausgabeeinheit ausgestattet sein, um Chemikalien auf dem Feld auszubringen. Das Saatgut-Dosiergerät und das Chemikalien-Dosiergerät werden durch einen Kettenantrieb angetrieben, der sich zwischen den Dosiergeräten und einer quer verlaufenden Antriebswelle erstreckt, die am Werkzeugträger angebracht ist. Die quer verlaufende Antriebswelle treibt alle Pflanzeinheiten an. Außerdem sind Sägeräte bekannt, die ähnlich wie Reihenpflanzgeräte arbeiten, jedoch jeweils mehrere Körner des Saatguts gleichzeitig ausbringen, während Pflanzgeräte in der Regel jeweils nur ein Saatgut-Korn zur Zeit ausbringen.

Derzeit betreiben viele Landwirte Minimal-Bodenbearbeitungs-Techniken. Diese Techniken umfassen das Einbringen des Saatguts direkt in Boden mit Pflanzenstoppeln, einschließlich stehengebliebener Mais-Stengel. Während der Maisernte wird der Maiskolben vom Stengel abgezogen und letzterer verbleibt einschließlich seiner Wurzeln auf dem Feld. Abhängig von den jeweiligen Bedingungen können diese Stengel aufrecht auf dem Feld aufragen. Wenn Reihenpflanzgeräte über die Stengel fahren, dringen diese gelegentlich in die Pflanzeinheiten ein und werfen die Ketten der Kettenantriebe der Dosiergeräte für Saatgut und Chemikalien herunter. Der Landwirt wird darüber in der Regel durch einen Saat-Monitor informiert, der dann kein durch das Saatgutrohr strömendes Saatgut mehr nachweisen kann, da das Dosiergerät nicht mehr angetrieben wird. Der Landwirt muß dann seinen Traktor anhalten, heruntersteigen und die Kette wieder auf die entsprechenden Zahnräder setzen, bevor er mit dem Saatvorgang fortfahren kann. Da einige Reihenpflanzgeräte z. B. mit 31 Pflanzeinheiten ausgestattet sind, kann die durch gegenwärtige Kettenantriebe erforderliche Wartung zeit- und arbeitsaufwändig sein. Es wurden Schutzbleche und Deflektoren verwendet, um das Problem zu lösen, aber sie erwiesen sich nicht als voll erfolgreich.

Flexible, drehbare Wellenantriebe wurden in landwirtschaftlichen Anwendungen benutzt. Sie wurden zur Ferneinstellung von Sieben in Mähdreschern verwendet. Außerdem wurden sie in Saat-Anwendungen benutzt. In der US 4 779 471 A ist eine derartige flexible Welle zwischen einem Bodenkontakt aufweisenden Rad und dem Dosiergerät einer Sämaschine, die nur ein einziges Dosiergerät aufweist, angeordnet.

Das der Erfindung zugrunde liegende Problem wird darin gesehen, einen verbesserten Antrieb für ein Dosiergerät eines landwirtschaftlichen Geräts zum Ausbringen von Gut bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Kerngedanke der Erfindung ist die Verwendung einer flexiblen, drehbaren Welle zwischen der Antriebswelle am Werkzeugträger und dem Dosiergerät für Saatgut und/oder Chemikalien der Ausbringeinheit.

Ein erfindungsgemäßes Gerät zum Ausbringen von Gut, bei dem es sich insbesondere um ein Reihenpflanzgerät oder ein Sägerät handelt, kann im wesentlichen von konventioneller Bauart sein, und weist einen sich quer erstreckenden Werkzeugträger auf, an dem mehrere Ausbringeinheiten befestigt sind. Jede dieser Ausbringeinheiten ist in der Regel mit einem Saatgutbehälter, einem Saatgut-Dosiergerät, einem Furchenöffner und einem Saatgutrohr ausgestattet, das sich zwischen Dosiergerät und der vom Furchenöffner erzeugten Furche erstreckt. In einigen Ausführungsformen kann das Ausbringgerät außerdem mit einem Chemikalien-Behälter, einem Chemikalien-Dosiergerät und einer Chemikalien-Ausbringeinheit ausgestattet sein. Das Saatgut-Dosiergerät und das Chemikalien-Dosiergerät, wenn vorhanden, werden durch eine flexible, drehbare Welle angetrieben, die sich zwischen der quer verlaufenden, hinter dem Werkzeugträger angeordneten Antriebswelle und den Dosiergeräten erstreckt.

Die Vorteile der Erfindung bestehen darin, daß der vorgeschlagene Antrieb des Dosiergeräts der Ausbringeinheit eine vertikale Bewegung relativ zum Werkzeugträger ermöglicht und trotzdem einwandfrei funktioniert. Er erfordert sehr wenig Wartung.

Vorzugsweise ist ein erstes Getriebe antriebsmäßig mit der quer verlaufenden Antriebswelle verbunden und wird zum Antrieb der flexiblen, drehbaren Welle verwendet. Ein zweites Getriebe in der Nähe des Dosiergeräts kann mit der flexiblen Welle antriebsmäßig gekoppelt sein und zum Antrieb des Dosiergeräts für Saatgut verwendet werden. Weiterhin kann ein drittes Getriebe in der Nähe des Dosiergeräts für Chemikalien angeordnet und mit der flexiblen Welle gekoppelt sein, um das Dosiergerät für Chemikalien anzutreiben. Alle genannten Getriebe können mit jeweils zwei zusammenwirkenden (Zahn-) Rädern zur Übertragung der Drehbewegung von der Antriebswelle auf die flexible Welle bzw. von letzterer auf das Dosiergerät ausgestattet sein. Die Antriebskopplungen zwischen den Dosiergeräten und den Getrieben können identisch mit denen konventioneller Pflanzeinheiten sein.

Die flexible, drehbare Welle ist aus Sicherheits- und Korrosionsschutzgründen vorzugsweise mit einer flexiblen, ortsfesten - also nicht mit rotierenden - Umhüllung ausgestattet.

In den Zeichnungen ist ein nachfolgend näher beschriebenes Ausführungsbeispiel der Erfindung dargestellt. Es zeigt:
- Fig. 1: eine Seitenansicht einer Ausbringeinheit, die an einem quer verlaufenden Werkzeugträger angebracht ist,
- Fig. 2: eine Ansicht eines erfindungsgemäßen Antriebszusammenbaus einer Ausbringeinheit, und
- Fig. 3: eine detaillierte seitliche Querschnittsansicht eines ersten Getriebes.

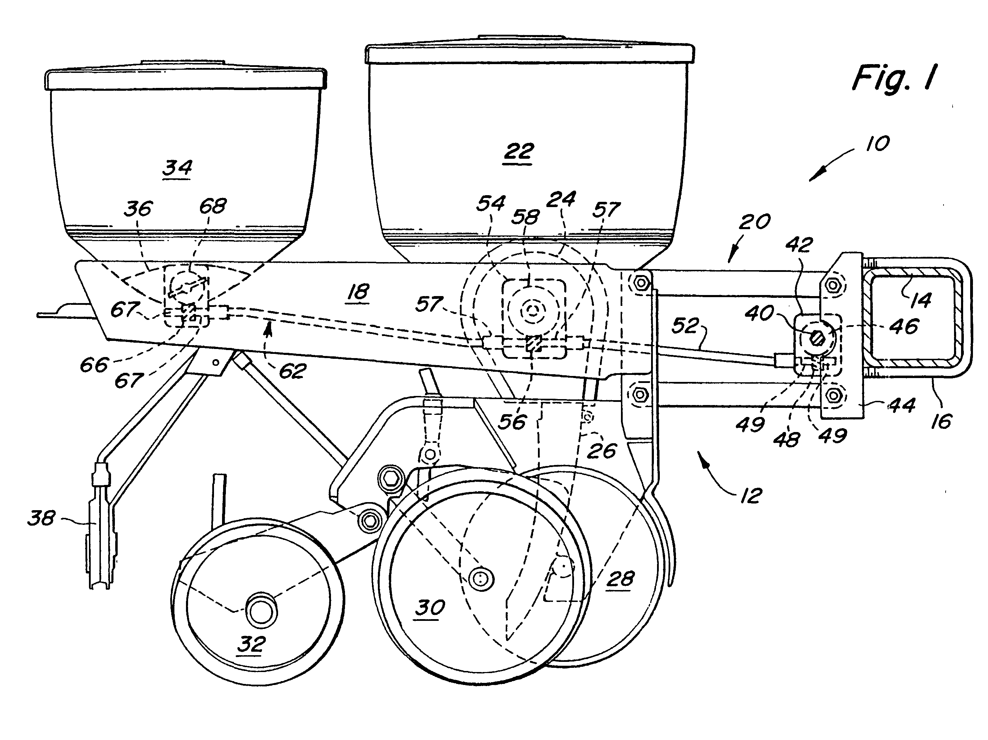

Figur 1 zeigt eine Seitenansicht eines Ausbringgeräts in Form eines Reihenpflanzgeräts 10, an dem die Erfindung beispielhaft erläutert wird. Es weist eine einzelne Pflanzeinheit 12 als Ausbringeinheit auf. Es ist anzumerken, daß ein Reihenpflanzgerät 10 eine Anzahl identischer Pflanzeinheiten 12 umfaßt. Jede der Pflanzeinheiten 12 pflanzt beim Überfahren des Bodens eine individuelle Reihe. Das Reihenpflanzgerät 10 umfaßt eine Mehrzahl von Pflanzeinheiten 12, die an einem quer verlaufenden Werkzeugträger 14 befestigt sind. Der Werkzeugträger 14 kann recht lang sein und Faltmechanismen aufweisen, um den Transport des Reihenpflanzgeräts 10 zu vereinfachen. Die Pflanzeinheiten 12 sind durch U-Bügel 16 am Werkzeugträger 14 angebracht. Jede Pflanzeinheit 12 ist mit einem Rahmen 18 versehen, der am quer verlaufenden Werkzeugträger 14 durch ein Parallellenkergestänge 20 befestigt ist. Das Parallellenkergestänge 20 erlaubt den Pflanzeinheiten 12 eine vertikale Bewegung nach oben und unten. Saatgut ist im Saatgutbehälter 22 gelagert und wird einem Dosiergerät 24 für Saatgut zugeführt. Vom Dosiergerät 24 für Saatgut wird dosiertes Saatgut einem Saatgutrohr 26 zugeleitet, das es in eine Pflanzfurche leitet, die durch einen Furchenöffner 28 geöffnet wurde. Tiefeneinstellräder 30 bestimmen bzw. steuern die Tiefe, in der das Saatgut abgelegt wird und Andrückräder 32 schließen die Pflanzfurche.

Schädlingsbekämpfungsmittel und/oder Dünger kann in einem Chemikalienbehälter 34 gelagert sein, der am Rahmen 18 der Pflanzeinheit 12 befestigt ist. Ein Dosiergerät 36 für Chemikalien führt dosierte Chemikalien einer Chemikalienausgabeeinheit 38 zu. Die Chemikalienausgabeeinheit 38 kann zum Ausbringen einer Vielzahl von Chemikalien verwendet werden, einschließlich Insektiziden und/oder Herbiziden.

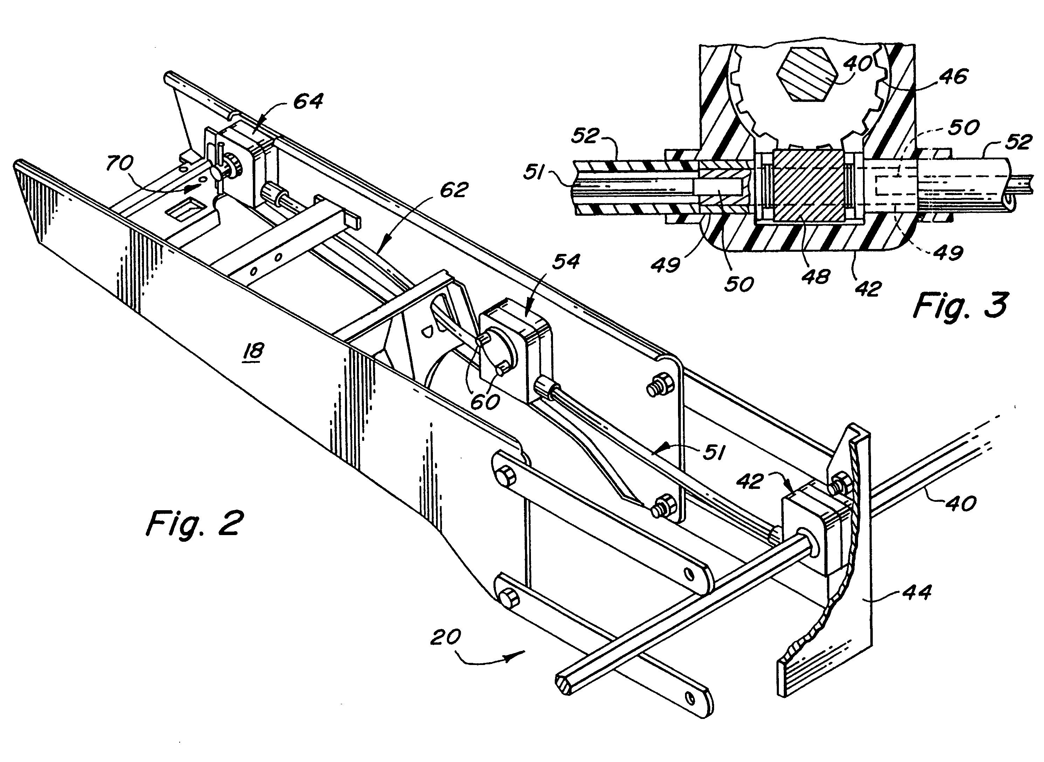

Die Dosiergeräte 24 für Saatgut und die Dosiergeräte 36 für Chemikalien der Vielzahl von Pflanzeinheiten 12 werden durch eine quer verlaufende Antriebswelle 40 angetrieben, die am sich quer erstreckenden Werkzeugträger 14 drehbar befestigt ist. Die quer verlaufende Antriebswelle 40 kann durch ein geeignetes Getriebe durch die Bewegung relativ zum Boden oder direkt durch einen Motor angetrieben werden. Die Antriebswelle 40 ist eine Sechskantwelle, die sich durch ein erstes Getriebe 42 erstreckt, welches an einer stationären Platte 44 des Parallellenkergestänges 20 befestigt ist. Das erste Getriebe 42 kann an der stationären Platte 44 befestigt sein, wie in Figur 1 und 2 dargestellt, oder es kann direkt am sich quer erstreckenden Werkzeugträger 14 befestigt sein. In der bevorzugten Ausführungsform ist das erste Getriebe 42 jedoch an der stationären Platte 44 befestigt. Das erste Getriebe 42 ist mit einem schrägverzahnten antreibenden Rad 46 ausgestattet, durch das sich die Antriebswelle 40 erstreckt. Die Antriebswelle 40 ist antriebsmäßig mit dem schrägverzahnten antreibenden Rad 46 verbunden, das seinerseits ein schrägverzahntes angetriebenes Rad 48 antreibt. Bei den Rädern 46, 48 kann es sich auch um ein Schneckenradgetriebe handeln, wobei das Rad 48 einen Schneckengang aufweist, oder um ein beliebiges anderes Zahnradgetriebe. Röhrenförmige Abschnitte 49 des angetriebenen Rads 48 erstrecken sich von ihm nach außen und sind drehbar in Lagerungen gelagert, die im Gehäuse des ersten Getriebes 42 angeordnet sind. Die röhrenförmigen Abschnitte 49 sind mit quadratischen Öffnungen versehen, in die ein quadratisches Antriebselement 50 einer flexiblen, drehbaren Welle 51 eingesetzt ist. Somit bewirkt eine Drehung des antreibenden Rades 46 eine Drehung der röhrenförmigen Abschnitte 49, die wiederum die quadratischen Antriebselemente 50 zur Drehung bringen, so daß diese die flexible Welle 51 drehen. Die flexible Welle 51 ist in einer flexiblen, nicht mitdrehenden Umhüllung 52 angebracht, die die Welle 51 vor der Einwirkung äußerer Elemente schützt. Die flexible, drehbare Welle 51 ist von dem Typ, der von Elliott Manufacturing in Binghampton, New York, USA, vertrieben wird.

Die flexible, drehbare Welle 51 erstreckt sich entlang des Parallellenkergestänges 20 nach hinten zum Dosiergerät 24 für Saatgut. Das vom ersten Getriebe 42 beabstandete Ende der flexiblen, drehbaren Welle 51 ist ebenfalls mit einem quadratischen Antriebselement versehen, das mit dem quadratischen Antriebselement 50 identisch ist. In der Nachbarschaft des Saatgut-Dosiergeräts 24 ist das quadratische Antriebselement in ein zweites Getriebe 54 eingesetzt, so daß eine Antriebsdrehbewegung von der flexiblen, drehbaren Welle 51 auf das zweite Getriebe 54 übertragbar ist. Diese Anordnung ist im wesentlichen identisch mit der im ersten Getriebe 42 verwendeten Anordnung, die in Figur 3 dargestellt ist. Das zweite Getriebe 54 ist mit einem schrägverzahnten antreibenden Rad 56 versehen, das röhrenförmige Abschnitte 57 hat, die mit quadratischen Öffnungen zur Aufnahme des quadratischen Antriebselements ausgestattet sind, welches das schrägverzahnte antreibende Rad 56 antreibt. Das schrägverzahnte antreibende Rad 56 treibt wiederum das schrägverzahnte angetriebene Rad 58 an, welches betriebsmäßig mit sich quer erstreckenden Stiften 60 zum Antrieb des Dosiergeräts 24 für Saatgut gekoppelt ist. Auch bei den Rädern 56, 58 kann es sich um ein Schneckengetriebe handeln, wobei das Rad 56 mit einem Schneckengang versehen ist, oder um ein beliebiges anderes Zahnradgetriebe. Die Kopplung mit quer verlaufenden Stiften 60 des Dosiergeräts 24 für Saatgut ist identisch mit der Antriebskopplung, die an existierenden Pflanzgeräten verwendet wird, so daß letztere leicht geändert werden können, um die flexible, drehbare Welle 51 gemäß der vorliegenden Erfindung zu verwenden.

Eine zweite drehbare, flexible Welle 62 erstreckt sich zwischen dem zweiten Getriebe 54 und einem dritten Getriebe 64, welches in der Nähe des Dosiergeräts 36 für Chemikalien angeordnet ist. Die Enden dieser zum Antrieb des Dosiergeräts 36 für Chemikalien dienenden Welle 62 sind wiederum mit quadratischen Antriebselementen versehen, die in die beiden genannten Getriebe 54, 64 eingreifen. Diese Anordnung ist im wesentlichen identisch mit der beim ersten Getriebe 42 verwendeten, in Figur 3 dargestellten Anordnung. Das dritte Getriebe 64 ist mit einem schrägverzahnten antreibenden Rad 66 ausgestattet, das röhrenförmige Abschnitte 67 aufweist, die mit einer quadratischen Öffnung zur Aufnahme des quadratischen Antriebselements der zweiten drehbaren, flexiblen Welle 62 versehen sind. Die zweite drehbare, flexible Welle 62 treibt ihrerseits das schrägverzahnte antreibende Rad 66 an, welches das schrägverzahnte angetriebene Rad 68 antreibt. Das schrägverzahnte angetriebene Rad 68 ist antriebsmäßig mit der Antriebskopplung 70 verbunden. Auch hier kann ein Schneckengetriebe eingesetzt werden. Die Antriebskopplung 70 ist identisch mit der Antriebskopplung bereits existierender Pflanzgeräte, so daß letztere leicht gemäß der vorliegenden Erfindung geändert werden können.

## Patentansprüche

1. Gerät (10) zum Ausbringen von Gut, mit einem Werkzeugträger (14), einer am Werkzeugträger (14) angebrachten Antriebswelle (40), und mehreren Ausbringeinheiten (12), die am Werkzeugträger (14) angebracht sind und jeweils ein Dosiergerät (24, 36) zum Dosieren von auszubringendem Gut, insbesondere Saatgut und/oder Chemikalien aufweisen, wobei sich der Werkzeugträger (14) und die Antriebswelle (40) quer zu einer Vorwärtsbewegungsrichtung des Geräts (10) erstrecken, **dadurch gekennzeichnet, dass** die Antriebswelle (40) in der Vorwärtsbewegungsrichtung des Geräts (10) hinter dem Werkzeugträger (14) angeordnet ist und dass eine flexible, drehbare Welle (51, 62) antriebsmäßig mit der Antriebswelle (40) und einem Dosiergerät (24, 36) verbunden ist.

2. Gerät (10) nach Anspruch 1, **gekennzeichnet durch** ein erstes Getriebe (42), das zwischen der flexiblen Welle (51) und der Antriebswelle (40) angebracht ist, um die flexible Welle (51) **durch** die Antriebswelle (40) anzutreiben.

3. Gerät (10) nach einem der vorhergehenden Ansprüche, **dadurch gekennzeichnet, daß** ein zweites Getriebe (54) zwischen der flexiblen Welle (51) und dem Dosiergerät (24) angeordnet ist, um das Dosiergerät (24) durch die flexible Welle (51) anzutreiben.

4. Gerät (10) nach einem Ansprüche 2 oder 3, **dadurch gekennzeichnet, daß** das erste Getriebe (42) mit einem antreibenden Rad (46), das drehfest mit der Antriebswelle (40) gekoppelt ist, und mit einem zweiten, angetriebenen Rad (48) ausgestattet ist, das mit dem antreibenden Rad (46) im Eingriff steht, um die flexible Welle (51) anzutreiben.

5. Gerät (10) nach einem Ansprüche 3 oder 4, **dadurch gekennzeichnet, daß** das zweite Getriebe (54) mit einem antreibenden Rad (56), das drehfest mit der flexiblen Welle (51) gekoppelt ist, und mit einem zweiten, angetriebenen Rad (48) ausgestattet ist, das mit dem antreibenden Rad (58) im Eingriff steht, um das Dosiergerät (24) anzutreiben.

6. Gerät (10) nach einem der vorhergehenden Ansprüche, **dadurch gekennzeichnet, daß** ein Dosiergerät (36) für Chemikalien mit einer zweiten flexiblen, drehbaren Welle (62) antreibbar ist.

7. Gerät (10) nach einem der vorhergehenden Ansprüche, **dadurch gekennzeichnet, daß** die flexible Welle (51, 62) in einer flexiblen, ortsfesten Umhüllung (52) angeordnet ist.

8. Gerät (10) nach einem der vorhergehenden Ansprüche, **dadurch gekennzeichnet, daß** die Ausbringeinheit (12) eine Pflanzeinheit und/oder eine Säeinheit ist.

9. Gerät (10) nach einem der vorhergehenden Ansprüche, **dadurch gekennzeichnet, daß** die Antriebswelle (40) innerhalb der vertikalen Erstreckung eines Rahmens (18) der Ausbringeinheit (12) sowie eines den Rahmen (18) am Werkzeugträger (14) halternden Parallellenkergestänges (20) angeordnet ist.

## Claims

1. An implement (10) for applying a product, with a tool carrier (14), a drive shaft (40) fined on the tool carrier (14) and a plurality of applicator units (12) which are fitted on the tool carrier (14) and each comprise a metering device (24, 36) for metering product to be applied, especially seeds and/or chemicals, wherein the tool carrier (14) and the drive shaft (40) extend transverse to a direction of forward movement of the implement (10), **characterized in that** the drive shaft (40) is arranged, in the direction of forward movement of the implement (10), behind the tool carrier (14) and **in that** a flexible, rotatable shaft (51, 62) is drivably connected to the drive shaft (40) and a metering device (24, 36).

2. An implement (10) according to claim 1, **characterized by** a first gearbox (42) which is fitted between the flexible shaft (51) and the drive shaft (40), in order to drive the flexible shaft (51) by the drive shaft (40).

3. An implement (10) according to either of the preceding claims, **characterized in that** a second gearbox (54) is arranged between the flexible shaft (51) and the metering device (24), in order to drive the metering device (24) by the flexible shaft (51).

4. An implement (10) according to claim 2 or 3, **characterized in that** the first gearbox (42) is provided with a driving gear (46) which is coupled rotationally fast to the drive shaft (40) and with a second driven gear (48) which is in engagement with the driving gear (46), in order to drive the flexible shaft (51).

5. An implement (10) according to claim 3 or 4, **characterized in that** the second gearbox (54) is provided with a driving gear (56) which is coupled rotationally fast to the flexible shaft (51) and with a second, driven gear (48) which is in engagement with the driving gear (58), in order to drive the metering device (24).

6. An implement (10) according to any of the preceding claims, **characterized in that** a metering device (36) for chemicals can be driven by a second, flexible, rotatable shaft (62).

7. An implement (10) according to any of the preceding claims, **characterized in that** the flexible shaft (51, 62) is arranged in a flexible, stationary sheath (52).

8. An implement (10) according to any of the preceding claims, **characterized in that** the applicator unit (12) is a planter unit and/or a seeder unit.

9. An implement (10) according to any of the preceding claims, **characterized in that** the drive shaft (40) is arranged within the vertical extent of a frame (18) of the applicator unit (12) as well as of a parallel link linkage (20) holding the frame (18) on the tool carrier (14).

## Revendications

1. Appareil (10) pour épandre une matière, comportant un porte-outil (14), un arbre d'entraînement (40) monté sur le porte-outil (14) et plusieurs unités d'épandage (12) qui sont montées sur le porte-outil (14) et comportent respectivement un appareil de dosage (24, 36) servant à doser la matière à épandre, notamment de la semence et/ou des produits chimiques, le porte-outil (14) et l'arbre d'entraînement (40) s'étendant transversalement par rapport à une direction d'avance de l'appareil (10), **caractérisé en ce que** l'arbre d'entraînement (40) est disposé en arrière du porte-outil (14) dans la direction d'avance de l'appareil (10), et qu'un arbre rotatif flexible (51, 62) est relié, selon une liaison motrice, à l'arbre d'entraînement (40) et à un appareil de dosage (24, 36).

2. Appareil (10) selon la revendication 1, **caractérisé par** un premier mécanisme (42), lequel est monté entre l'arbre flexible (51) et l'arbre d'entraînement (40) de manière à entraîner l'arbre flexible (50) au moyen de l'arbre d'entraînement (40).

3. Appareil (10) selon l'une des revendications précédentes, **caractérisé en ce qu'**un second mécanisme (54) est disposé entre l'arbre flexible (51) et l'appareil de dosage (24) pour entraîner l'appareil de dosage (24) au moyen de l'arbre flexible (51).

4. Appareil (10) selon l'une des revendications 2 ou 3, **caractérisé en ce que** le premier mécanisme (42) est équipé d'une roue motrice (46) qui est couplée solidairement en rotation à l'arbre d'entraînement (40), et par une seconde roue entraînée (48) qui est en prise avec la roue motrice (46) pour entraîner l'arbre flexible (51).

5. Appareil (10) selon l'une des revendications 3 ou 4, **caractérisé en ce que** le second mécanisme (54) est équipé d'une roue motrice (56) couplée solidairement en rotation à l'arbre flexible (51), et une seconde roue entraînée (48) qui est en prise avec la roue motrice (58) pour entraîner l'appareil de dosage (24).

6. Appareil (10) selon l'une des revendications précédentes, **caractérisé en ce qu'**un appareil de dosage (36) pour des produits chimiques peut être entraîné par un seconde arbre rotatif flexible (62).

7. Appareil (10) selon l'une des revendications précédentes, **caractérisé en ce que** l'arbre flexible (51, 62) est monté dans une enveloppe flexible fixe (52).

8. Appareil (10) selon l'une des revendications précédentes, **caractérisé en ce que** l'unité d'épandage (12) est une unité pour effectuer une plantation et/ou un semoir.

9. Appareil (10)selon l'une des revendications précédentes, **caractérisé en ce que** l'arbre d'entraînement (40) est disposé à l'intérieur de l'étendue verticale d'un cadre (18) de l'unité d'épandage (12) ainsi que d'une tringlerie (12) à leviers articulés parallèles, qui retient le cadre (18) sur le porte-outil (14).
